# EUROPÄISCHE PATENTSCHRIFT

(11) **EP 1 602 901 B1**
(45) Veröffentlichungstag und Bekanntmachung des Hinweises auf die Patenterteilung: **28.11.2007**
(21) Anmeldenummer: 05007618.1
(22) Anmeldetag: 07.04.2005
(51) Int. Cl.: G01F 23/24, B22D 11/18

(54) **Verfahren und Vorrichtung zur Messung der Niveauhöhe einer Metallschmelze**
Method and device for measuring the liquid level in a metal melt
Procédé et dispositif pour la mesure de niveau de liquide dans un récipient contenant métal en fusion

(30) Priorität: 03.06.2004 DE 102004027194
(43) Veröffentlichungstag der Anmeldung: 07.12.2005
(73) Patentinhaber: NORDDEUTSCHE AFFINERIE AG, 20539 Hamburg (DE)
(72) Erfinder: Schliefer, Heinrich, 21220 Seevetal (DE); Naaf, Rüdiger, 21439 Marxen (DE); Rübke, Henry, 21629 Neu Wulmstorf (DE)
(74) Vertreter: Klickow, Hans-Henning

(56) Entgegenhaltungen:
- EP-A- 0 131 979
- CH-A5- 682 847

## Beschreibung

Die Erfindung betrifft ein Verfahren zur Messung der Niveauhöhe einer Metallschmelze, bei dem eine Meßsonde mit einer Bewegungskomponente senkrecht zur Schmelzeoberfläche der Metallschmelze alternierend in Richtung auf die Schmelzeoberfläche und von der Schmelzeoberfläche weg bewegt wird sowie bei dem elektrisch eine Impedanz zwischen der Metallschmelze und der Meßsonde erfaßt sowie eine jeweilige Positionierung der Meßsonde bestimmt wird.

Die Erfindung betrifft darüber hinaus eine Vorrichtung zur Messung der Niveauhöhe einer Metallschmelze, die eine Meßsonde, eine die Meßsonde mit einer Bewegungskomponente senkrecht zur Oberfläche der Metallschmelze alternierend positionierende Antriebseinrichtung sowie eine Meßeinrichtung zur Erfassung einer elektrischen Impedanz zwischen der Meßsonde und der Metallschmelze aufweist und die mit einer Einrichtung zur Bestimmung einer jeweiligen Positionierung der Meßsonde versehen ist.

Ein derartiges Verfahren und eine derartige Vorrichtung werden bereits in der EP-A 0 131 979 beschrieben. Eine stabförmige Meßsonde wird hier in vertikaler Richtung von oben in Richtung auf eine flüssige Kupferschmelze bewegt und es wird eine mit sich verringerndem Abstand zwischen der Meßsonde und der Kupferschmelze ebenfalls abnehmende Impedanz zwischen der Meßsonde und der Kupferschmelze meßtechnisch erfaßt. Da ein Impedanzwert von 0 einem Eintauchen der Meßsonde in die Kupferschmelze entsprechen würde, wird bei einem vorgebbaren Minimalwert der Impedanz eine Rückwärtsbewegung der Meßsonde eingeleitet. Aus der zum Umkehrzeitpunkt bekannten Position der Meßsonde relativ zu einem Boden eines die Schmelze enthaltenden Behälters und einem dem Abstand der Meßsonde von der Schmelzeoberfläche im Umkehrpunkt entsprechenden Korrekturwert kann die Niveauhöhe der Schmelze bestimmt werden.

Eine Niveauermittlung der Metallschmelze unter Verwendung einer Impedanzmessung erweist sich insbesondere dann als vorteilhaft, wenn das Niveau der Metallschmelze durch eine Abdeckschicht hindurch gemessen werden muß, die chemische Reaktionen mit der Umgebungsatmosphäre verhindern soll. Generell sind auch weitere berührungslose direkte oder indirekte Meßverfahren zur Ermittlung eines Schmelzepegels bekannt. Dies sind beispielsweise optische Verfahren, Laserverfahren, Radarmessungsverfahren, Temperaturmeßverfahren, induktive Verfahren sowie Wirbelstromverfahren. Ebenfalls sind bereits radiometrische und akustische Verfahren sowie Verfahren unter Verwendung einer Kamera bekannt geworden.

Die Verwendung eines Impedanzmeßverfahrens unter Berücksichtigung eines Umkehrpunktes der Meßsonde erweist sich als problematisch, wenn Metallschmelzen mit blanker Oberfläche vorliegen. Bei derartigen blanken Oberflächen entstehen diffuse Meßwerte und somit undefinierte Umkehrpunkte. Dies führt dazu, daß die Meßsonde in die Schmelze eintaucht, so daß sich am Ende der Meßsonde Metall aus der Schmelze abscheidet, das zu einer Verlängerung der Meßsonde führt. Diese Verlängerung der Meßsonde durch erkaltete Schmelze hat zur Folge, daß bei allen nachfolgenden Messungen die Impedanz zwischen der verlängerten Meßsonde und der Metallschmelze erfaßt wird, ohne daß die verlängerte Meßsonde bei der Meßwertauswertung berücksichtigt wird. Die Verlängerung der Meßsonde führt somit zu einem angenommenen höheren Schmelzpegel, da bei einer Absenkung der Meßsonde früher der Umkehrpunkt erreicht wird.

Ein weiteres Problem bei Messungen im Bereich blanker Metallschmelzen resultiert daraus, daß auch bei einer Abdekkung mit einem Schutz- oder Inertgas durch Sprühentgasungen der Schmelze Metallniederschläge oder Anbackungen an der Meßsonde entstehen, die zu einer Verlängerung der Meßsonde und somit ebenfalls zu Fehlmessungen führen.

Die bekannten Verfahren und Vorrichtungen sind deshalb nicht in ausreichender Weise dafür geeignet, alle Anforderungen zu erfüllen, die an eine hohe Meßgenauigkeit und eine reproduzierbare Durchführung des Meßverfahrens gestellt werden.

Aufgabe der vorliegenden Erfindung ist es, ein Verfahren der einleitend genannten Art derart zu verbessern, daß für eine Vielzahl von Meßzyklen eine hohe und reproduzierbare Meßqualität unterstützt wird.

Diese Aufgabe wird erfindungsgemäß dadurch gelöst, daß entlang mindestens eines Teiles der Meßsonde ein Polstergas in Richtung auf die Metallschmelze geleitet wird.

Weitere Aufgabe der vorliegenden Erfindung ist es, eine Vorrichtung der einleitend genannten Art derart zu konstruieren, daß Metallanwachsungen an der Meßsonde verhindert oder wenigstens vermindert werden.

Diese Aufgabe wird erfindungsgemäß dadurch gelöst, daß die Meßsonde im Bereich ihrer der Metallschmelze zuwendbaren Ausdehnung mindestens eine Austrittsöffnung für ein Polstergas aufweist.

Durch das der Austrittsöffnung entströmende Polstergas wird das aufgrund der sonstigen Produktionsbedingungen die Grenzschicht zwischen der Metallschmelze und einer Umgebung bildende Gas im Meßbereich durch das Polstergas verdrängt. Das Polstergas besitzt sowohl hinsichtlich seiner Temperatur als auch hinsichtlich seiner Ionisation konstante und bekannte Eigenschaften, die bei der Auswertung der Meßsignale berücksichtigt können. Insbesondere führt ein innerhalb des Polstergases gegebener Abstand zwischen der Meßsonde und der Oberfläche der Metallschmelze zu exakt reproduzierbaren Impedanzwerten unabhängig von den jeweiligen Umgebungsbedingungen.

Eine einfache Zuführung des Polstergases kann dadurch erfolgen, daß das Polstergas aus einem Innenraum der Meßsonde herausgeleitet wird.

Eine Abschirmung des für die Durchführung der Impedanzmessung verwendeten Teiles der Meßsonde gegenüber einem Umgebungsgas mit undefinierten Eigenschaften wird dadurch erleichtert, daß das Polstergas mindestens bereichsweise entlang eines Innenteiles der Meßsonde strömt.

Eine besonders wirksame Abschirmung gegenüber dem Umgebungsgas kann dadurch erfolgen, daß das Polstergas aus einer das Innenteil umgebenden ringförmigen Austrittsöffnung herausströmt.

Die Gleichmäßigkeit der Abschirmung sowie ein günstiges Strömungsprofil des Polstergases werden dadurch unterstützt, daß das Polstergas aus einer im wesentlichen kreisringförmigen Austrittsöffnung herausströmt.

Eine weitere Vereinfachung des konstruktiven Gesamtaufbaues kann dadurch erreicht werden, daß als Polstergas ein Schutzgas verwendet wird.

Zur Erreichung reproduzierbarer Meßergebnisse trägt es insbesondere bei, daß das Polstergas mit einer definierten und bekannten Ionisation in Richtung auf die Schmelzeoberfläche strömt.

Darüber hinaus erweist es sich als vorteilhaft, daß das Polstergas mit einer im wesentlichen konstanten und bekannten Temperatur in Richtung auf die Metallschmelze strömt.

Eine einfache mechanische Realisierung der Antriebsvorrichtung für die Meßsonde wird dadurch unterstützt, daß die Meßsonde relativ zur Schmelzeoberfläche im wesentlichen senkrecht hin und her bewegt wird.

Ein bevorzugtes Anwendungsgebiet wird dadurch definiert, daß die Meßsonde als Teil einer Regelung für eine Niveauhöhe der Metallschmelze innerhalb eines Schmelzebehälters verwendet wird.

Eine bevorzugte Anwendung bei der Kupferproduktion erfolgt derart, daß die Niveauhöhe der Metallschmelze im Bereich einer Strangußkokille gemessen wird.

Ein Meßvorgang im Zusammenhang mit der Bestimmung des Schmelzepegels in der Metallschmelze besteht darin, daß eine Positionserfassung der Meßsonde relativ zur Position eines Behälterbodens des Schmelzebehälters durchgeführt wird.

Die Bewegungssteuerung der Meßsonde wird dadurch unterstützt, daß ein der Metallschmelze zugewandter Umkehrpunkt für die Bewegung der Meßsonde durch eine Positionsmessung der Meßsonde erfaßt und bei der meßtechnischen Ermittlung der Pegelhöhe der Metallschmelze ausgewertet wird.

Bei Metallschmelzen, die von Grenzschichten gegenüber einer Umgebung abgeschirmt sind, erweist es sich als vorteilhaft, daß eine Umkehrbewegung der Meßsonde in Abhängigkeit von einer durchgeführten Impedanzmessung vorgegeben wird.

Gemäß einem weiteren Meßprinzip ist vorgesehen, daß die Umkehrbewegung der Meßsonde in Abhängigkeit von einer Differenzmessung durchgeführt wird.

Ein zweckmäßiger konstruktiver Aufbau besteht darin, daß die Meßsonde ein von einem Mantel umgebenes Innenteil aufweist.

Eine einfache Zuleitung des Polstergases in den Meßbereich wird dadurch unterstützt, daß sich zwischen dem Innenteil und dem Mantel mindestens bereichsweise ein Spalt erstreckt.

Eine besonders kompakte Ausführungsform wird dadurch bereitgestellt, daß der Mantel das Innenteil mindestens bereichsweise koaxial umgibt.

Eine gleichmäßige Abschirmung des Meßortes gegenüber undefinierten Umgebungsbedingungen erfolgt dadurch, daß die Austrittsöffnung das Innenteil kreisringförmig umgibt.

Ein modularer Meßaufbau, der eine Auswechselbarkeit von Verschleißteilen unterstützt, wird dadurch bereitgestellt, daß das Innenteil eine aus dem Mantel herausragende Meßspitze aufweist.

Eine vorteilhafte Anschlußmöglichkeit an eine Versorgungseinrichtung für das Polstergas besteht darin, daß die Meßsonde mit einer Gaszuleitung versehen ist.

Insbesondere erweist es sich als vorteilhaft, daß die Gaszuleitung als ein T-Stück ausgebildet ist, das an den Mantel angeschlossen ist.

Zu einem modularen Vorrichtungsaufbau trägt es ebenfalls bei, daß das Innenteil auswechselbar im Mantel gehaltert ist.

Ein minimaler Polstergasverbrauch wird dadurch unterstützt, daß die Austrittsöffnung eine Ausströmungsrichtung im wesentlichen in Richtung einer Längsachse der Meßsonde aufweist.

Ein örtlich vergrößerter Abschirmbereich kann dadurch bereitgestellt werden, daß die Austrittsöffnung eine Strömungsrichtung im wesentlichen schräg zur Längsachse der Meßsonde aufweist.

In den Zeichnungen sind Ausführungsbeispiele der Erfindung schematisch dargestellt. Es zeigen:
- Fig. 1: eine schematische Darstellung zur Veranschaulichung des Grundprinzips der Messung,
- Fig. 2: eine vergrößerte Prinzipdarstellung der Meßsonde mit Polstergaszufuhr,
- Fig. 3: eine vergrößerte Darstellung der Einzelheit III in Fig. 2 und
- Fig. 4: eine vergrößerte Querschnittdarstellung gemäß Schnittlinie IV in Fig. 2.

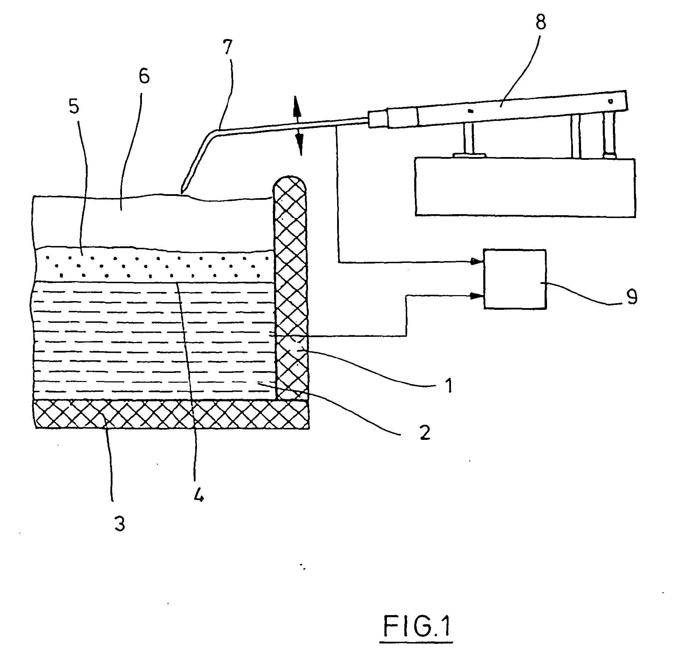

Fig. 1 zeigt eine teilweise Darstellung eines Vertikalschnittes durch einen Schmelzebehälter (1), in dem eine Metallschmelze (2) angeordnet ist. Der Schmelzebehälter (1) ist mit einem Behälterboden (3) versehen und eine Schmelzeoberfläche (4) ist von einem Schutzgas (5) abgedeckt, das eine Grenzschicht zwischen der Metallschmelze (2) und einer Umgebungsatmosphäre (6) ausbildet.

In lotrechter Richtung oberhalb der Metallschmelze (2) ist eine Meßsonde (7) angeordnet, die mit einem Antrieb (8) gekoppelt ist, um eine pendelnde Bewegung der Meßsonde (7) in Richtung auf die Metallschmelze (2) und von der Metallschmelze (2) weg durchzuführen. Die Meßsonde (7) ist darüber hinaus an eine Impedanzmeßschaltung (9) angeschlossen. Die Impedanzmeßschaltung und der Antrieb (8) sind an eine übergeordnete Regelungseinrichtung angeschlossen, die die Positionierung der Meßsonde in Abhängigkeit von der gemessenen Impedanz vornimmt. Die Meßsonde (7) wird soweit an die Metallschmelze (2) angenähert, bis von der Impedanzmeßschaltung (9) ein vorgegebenes Impedanzminimum erfaßt wird, das einem Mindestabstand zwischen der Metallschmelze (2) und der Meßsonde (7) entspricht. Bei Erreichen dieses Minimumwertes beendet der Antrieb (8) die Bewegung der Meßsonde (7) in Richtung auf die Metallschmelze und gibt eine sich von der Metallschmelze (2) entfernende Bewegung der Meßsonde (7) vor.

Der Antrieb (8) ist darüber hinaus an eine Einrichtung zur Erfassung einer jeweiligen Position der Meßsonde (7) relativ zum Behälterboden (3) angeschlossen. Unter Berücksichtigung der Positionierung der Meßsonde (7) relativ zum Behälterboden (3) und unter Berücksichtigung eines Abstandes der Meßsonde (7) von der Schmelzeoberfläche (4) bei Erreichen des Minimalwertes der Impedanz ergibt sich die Pegelhöhe der Metallschmelze (2) innerhalb des Schmelzebehälters (1).

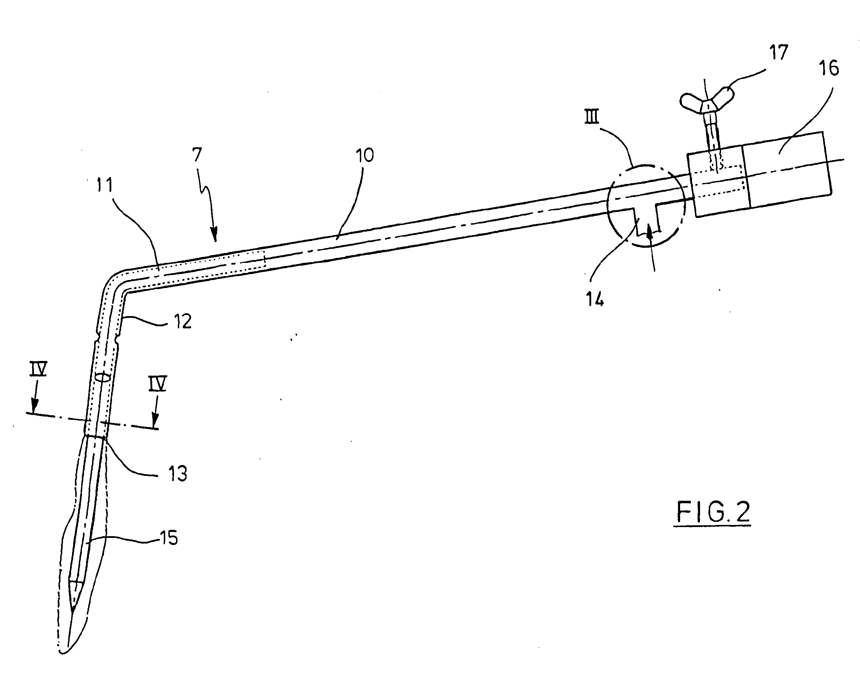

Fig. 2 zeigt den Aufbau der Meßsonde (7) im Detail. Beim dargestellten Ausführungsbeispiel weist die Meßsonde (7) einen rohrförmigen Mantel (10) auf, der ein Innenteil (11) haltert, das als ein Sensorteil ausgebildet ist. Zwischen dem Innenteil (11) und dem Mantel (10) erstreckt sich ein Spalt (12), der beim dargestellten Ausführungsbeispiel im wesentlichen ringförmig ausgebildet ist und in eine Austrittsöffnung (13) einmündet. Die Meßsonde (7) weist darüber hinaus eine Gaszuleitung (14) auf, die als ein T-Stück ausgebildet sein kann, das in den rohrförmigen Mantel (10) integriert ist. Durch die Gaszuleitung (14) wird ein Polstergas in den Innenraum des Mantels (11) hineingeleitet, durchströmt den Spalt (12) und tritt aus der Austrittsöffnung (13) aus. Das aus der Austrittsöffnung (13) herausströmende Polstergas umströmt eine Meßspitze (15) der Meßsonde (7), die als eine Verlängerung des Innenteiles (11) ausgebildet ist. Eine Hauptströmungsrichtung weist hierbei eine Orientierung in Richtung auf die Metallschmelze (2) auf.

Als Material für die Meßspitze (15) hat sich Wolfram bewährt. Eine Halterung der Meßsonde (7) kann über ein mit dem Antrieb (8) verbundenes Kupplungsteil (16) erfolgen, das wenigstens bereichsweise aus Keramik ausgebildet ist. Innerhalb des Kupplungsteils (16) kann die Meßsonde (7) auswechselbar von einem Fixierelement (16) festgeklemmt werden.

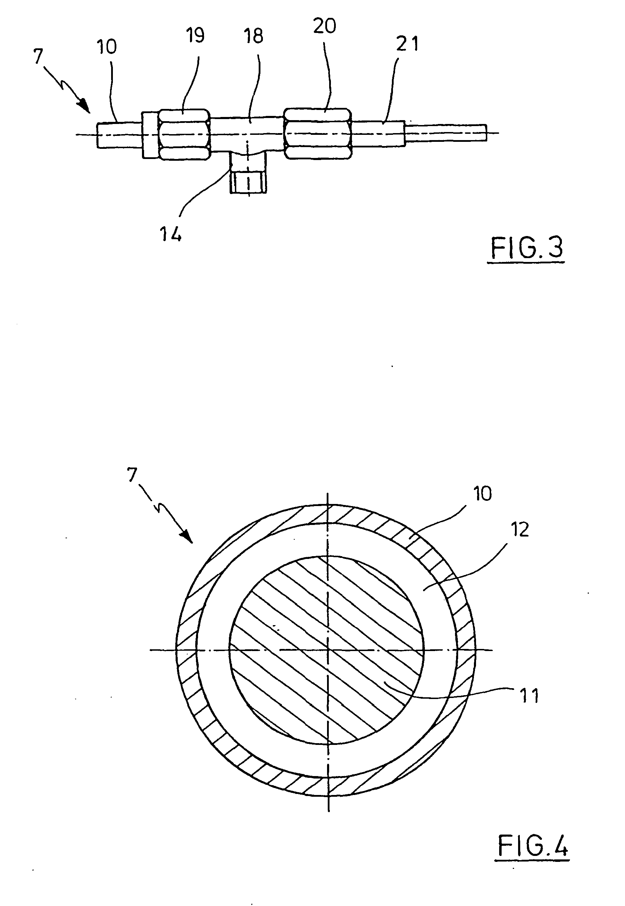

Fig. 3 zeigt die Anordnung der Gaszuleitung (14) in stärkerer Detailliertheit. Es ist zu erkennen, daß die Gaszuleitung (14) als ein T-Stück (18) ausgebildet ist, das über Verschraubungen (19, 20) einerseits mit dem Mantel (10) der Meßsonde (7) und andererseits mit einem aus dem Kupplungsteil (16) herausragenden Mantelsegment (21) verbunden ist. Diese konstruktive Realisierung der Gaszuleitung (14) unterstützt eine einfache Auswechselbarkeit der verwendeten Bauelemente.

Fig. 4 zeigt in einer Querschnittdarstellung die Anordnung des Spaltes (12) zwischen dem Mantel (10) und dem Innenteil (11). Es ist insbesondere zu erkennen, daß der Spalt (12) das Innenteil (11) im wesentlichen ringförmig umgibt und hierdurch auch eine im wesentlichen ringförmige Austrittsöffnung (13) bereitstellt. Das austretenden Polstergas umgibt hierdurch gleichmäßig die Meßspitze (15) und verdrängt am Meßort die im übrigen Bereich der Schmelzeoberfläche (7) anzutreffende produktionsabhängige zusammensetzung des Schutzgases (5). Das Schutzgas (5) wird hierdurch am Meßort durch das Polstergas mit exakt bekannter Ionisation und Temperatur ersetzt.

## Patentansprüche

1. Verfahren zur Messung der Niveauhöhe einer Metallschmelze, bei dem eine Meßsonde mit einer Bewegungskomponente senkrecht zur Schmelzeoberfläche der Metallschmelze alternierend in Richtung auf die Schmelzeoberfläche und von der Schmelzeoberfläche weg bewegt wird sowie bei dem elektrisch eine Impedanz zwischen der Metallschmelze und der Meßsonde erfaßt sowie eine jeweilige Positionierung der Meßsonde bestimmt wird, **dadurch gekennzeichnet, daß** entlang mindestens eines Teiles der Meßsonde (7) ein Polstergas in Richtung auf die Metallschmelze (2) geleitet wird.

2. Verfahren nach Anspruch 1, **dadurch gekennzeichnet, daß** das Polstergas aus einem Innenraum der Meßsonde (7) herausgeleitet wird.

3. Verfahren nach Anspruch 1 oder 2, **dadurch gekennzeichnet, daß** das Polstergas mindestens bereichsweise entlang eines Innenteiles (11) der Meßsonde (7) strömt.

4. Verfahren nach einem der Ansprüche 1 bis 3, **dadurch gekennzeichnet, daß** das Polstergas aus einer das Innenteil (12) umgebenden ringförmigen Austrittsöffnung (13) herausströmt.

5. Verfahren nach Anspruch 4, **dadurch gekennzeichnet, daß** das Polstergas aus einer im wesentlichen kreisringförmigen Austrittsöffnung herausströmt.

6. Verfahren nach einem der Ansprüche 1 bis 5, **dadurch gekennzeichnet, daß** als Polstergas ein Schutzgas (5) verwendet wird.

7. Verfahren nach einem der Ansprüche 1 bis 6, **dadurch gekennzeichnet, daß** das Polstergas mit einer definierten und bekannten Ionisation in Richtung auf die Schmelzeoberfläche (4) strömt.

8. Verfahren nach einem der Ansprüche 1 bis 7, **dadurch gekennzeichnet, daß** das Polstergas mit einer im wesentlichen konstanten und bekannten Temperatur in Richtung auf die Metallschmelze (2) strömt.

9. Verfahren nach einem der Ansprüche 1 bis 8, **dadurch gekennzeichnet, daß** die Meßsonde (7) relativ zur Schmelzeoberfläche (4) im wesentlichen senkrecht hin und her bewegt wird.

10. Verfahren nach einem der Ansprüche 1 bis 9, **dadurch gekennzeichnet, daß** die Meßsonde (7) als Teil einer Regelung für eine Niveauhöhe der Metallschmelze (2) innerhalb eines Schmelzebehälters (2) verwendet wird.

11. Verfahren nach einem der Ansprüche 1 bis 10, **dadurch gekennzeichnet, daß** die Niveauhöhe der Metallschmelze (2) im Bereich einer Strangußkokille gemessen wird.

12. Verfahren nach einem der Ansprüche 1 bis 11, **dadurch gekennzeichnet, daß** eine Positionserfassung der Meßsonde (7) relativ zur Position eines Behälterbodens (3) des Schmelzebehälters (1) durchgeführt wird.

13. Verfahren nach einem der Ansprüche 1 bis 12, **dadurch gekennzeichnet, daß** ein der Metallschmelze (2) zugewandter Umkehrpunkt für die Bewegung der Meßsonde (7) durch eine Positionsmessung der Meßsonde (7) erfaßt und bei der meßtechnischen Ermittlung der Pegelhöhe der Metallschmelze (2) ausgewertet wird.

14. Verfahren nach einem der Ansprüche 1 bis 13, **dadurch gekennzeichnet, daß** eine Umkehrbewegung der Meßsonde (7) in Abhängigkeit von einer durchgeführten Impedanzmessung vorgegeben wird.

15. Verfahren nach einem der Ansprüche 1 bis 14, **dadurch gekennzeichnet, daß** die Umkehrbewegung der Meßsonde (7) in Abhängigkeit von einer Differenzmessung durchgeführt wird.

16. Vorrichtung zur Messung einer Niveauhöhe einer Metallschmelze, die eine Meßsonde, eine die Meßsonde mit einer Bewegungskomponente senkrecht zur Schmelzoberfläche der Metallschmelze alternierend positionierende Antriebseinrichtung sowie eine Meßeinrichtung zur Erfassung einer elektrischen Impedanz zwischen der Meßsonde und der Metallschmelze aufweist und die mit einer Einrichtung zur Bestimmung einer jeweiligen Positionierung der Meßsonde versehen ist, **dadurch gekennzeichnet, daß** die Meßsonde (7) im Bereich ihrer der Metallschmelze (2) zuwendbaren Ausdehnung mindestens eine Austrittsöffnung (13) für ein Polstergas aufweist.

17. Vorrichtung nach Anspruch 16, **dadurch gekennzeichnet, daß** die Meßsonde (7) ein von einem Mantel (10) umgebenes Innenteil (11) aufweist.

18. Vorrichtung nach Anspruch 16 oder 17, **dadurch gekennzeichnet, daß** sich zwischen dem Innenteil (11) und dem Mantel (10) mindestens bereichsweise ein Spalt (12) erstreckt.

19. Vorrichtung nach einem der Ansprüche 16 bis 18, **dadurch gekennzeichnet, daß** der Mantel (10) das Innenteil (11) mindestens bereichsweise koaxial umgibt.

20. Vorrichtung nach einem der Ansprüche 16 bis 19, **dadurch gekennzeichnet, daß** die Austrittsöffnung (13) das Innenteil (11) kreisringförmig umgibt.

21. Vorrichtung nach einem der Ansprüche 16 bis 20, **dadurch gekennzeichnet, daß** das Innenteil (11) eine aus dem Mantel (10) herausragende Meßspitze (15) aufweist.

22. Vorrichtung nach einem der Ansprüche 16 bis 21, **dadurch gekennzeichnet, daß** die Meßsonde (7) mit einer Gaszuleitung (14) versehen ist.

23. Vorrichtung nach Anspruch 22, **dadurch gekennzeichnet, daß** die Gaszuleitung (14) als ein T-Stück ausgebildet ist, das an den Mantel (10) angeschlossen ist.

24. Vorrichtung nach einem der Ansprüche 16 bis 23, **dadurch gekennzeichnet, daß** das Innenteil (11) auswechselbar im Mantel (10) gehaltert ist.

25. Vorrichtung nach einem der Ansprüche 16 bis 24, **dadurch gekennzeichnet, daß** die Austrittsöffnung (13) eine Ausströmungsrichtung im wesentlichen in Richtung einer Längsachse der Meßsonde (7) aufweist.

26. Vorrichtung nach einem der Ansprüche 16 bis 25, **dadurch gekennzeichnet, daß** die Austrittsöffnung (13) eine Strömungsrichtung im wesentlichen schräg zur Längsachse der Meßsonde (7) aufweist.

## Claims

1. Method for measuring the level of a metal melt, in which a measurement probe with a moving component is moved perpendicular to the melt surface of the metal melt alternately in the direction towards the melt surface and in the direction away from the melt surface, in which an impedance between the metal melt and the measurement probe is detected electrically, and in which a respective positioning of the measurement probe is determined, **characterised in that** a cushioning gas is guided along at least a part of the measurement probe (7) in the direction of the metal melt (2).

2. Method according to claim 1, **characterised in that** the cushioning gas is guided outwardly from the interior of the measurement probe (7).

3. Method according to claim 1 or 2, **characterised in that** the cushioning gas flows at least over a region along an inner part (11) of the measurement probe (7).

4. Method according to one of claims 1 to 3, **characterised in that** the cushioning gas flows out from an annular outlet opening (13) surrounding the inner part (12).

5. Method according to claim 4, **characterised in that** the cushioning gas flows out from a substantially circular-shaped outlet opening.

6. Method according to one of claims 1 to 5, **characterised in that** a protective gas (5) is used as cushioning gas.

7. Method according to one of claims 1 to 6, **characterised in that** the cushioning gas flows with a defined and known ionisation in the direction towards the melt surface (4).

8. Method according to one of claims 1 to 7, **characterised in that** the cushioning gas flows with a substantially constant and known temperature in the direction towards the metal melt (2).

9. Method according to one of claims 1 to 8, **characterised in that** the measurement probe (7) is moved substantially perpendicularly backwards and forwards relative to the melt surface (4).

10. Method according to one of claims 1 to 9, **characterised in that** the measurement probe (7) is used as part of a means for regulating the level of the metal melt (2) within a melt container (2).

11. Method according to one of claims 1 to 10, **characterised in that** the level of the metal melt (2) is measured in the region of a continuous casting mould.

12. Method according to one of claims 1 to 11, **characterised in that** the position of the measurement probe (7) is measured relative to the position of a container floor (3) of the melt container (1).

13. Method according to one of claims 1 to 12, **characterised in that** a reverse point facing towards the metal melt (2) is detected for the movement of the measurement probe (7) by measuring the position of the measurement probe (7) and is evaluated in the measurement technology determination of the level of the metal melt (2).

14. Method according to one of claims 1 to 13, **characterised in that** a reverse movement of the measurement probe (7) is predetermined depending on an implemented impedance measurement.

15. Method according to one of claims 1 to 14, **characterised in that** the reverse movement of the measurement probe (7) is implemented depending on a difference measurement.

16. Device for measuring the level of a metal melt, which comprises a measurement probe, a drive device alternately positioning the measurement probe with a moving component perpendicular to the melt surface of the metal melt, as well as a measuring instrument for determining an electrical impedance between the measurement probe and the metal melt, and which is provided with a means for determining a respective positioning of the measurement probe, **characterised in that** the measurement probe (7) comprises at least one outlet opening (13) for a cushioning gas in the region of its extension that can face towards the metal melt (2).

17. Device according to claim 16, **characterised in that** the measurement probe (7) comprises an inner part (11) surrounded by a jacket (10).

18. Device according to claim 16 or 17, **characterised in that** a gap (12) extends at least over a region between the inner part (11) and the jacket (10).

19. Device according to one of claims 16 to 18, **characterised in that** the jacket (10) coaxially surrounds at a region of the inner part (11).

20. Device according to one of claims 16 to 19, **characterised in that** the outlet opening (13) surrounds the inner part (11) in a circular-shaped manner.

21. Device according to one of claims 16 to 20, **characterised in that** the inner part (11) comprises a measurement tip (15) projecting from the jacket (10).

22. Device according to one of claims 16 to 21, **characterised in that** the measurement probe (7) is provided with a gas feed line (14).

23. Device according to claim 22, **characterised in that** the gas feed line (14) is formed as a T-shaped piece, which is connected to the jacket (10).

24. Device according to one of claims 16 to 23, **characterised in that** the inner part (11) is replaceably mounted in the jacket (10).

25. Device according to one of claims 16 to 24, **characterised in that** the outlet opening (13) has an outflow direction substantially in the direction of a longitudinal axis of the measurement probe (7).

26. Device according to one of claims 16 to 25, **characterised in that** the outlet opening (13) has a flow direction substantially inclined to the longitudinal axis of the measurement probe (7).

## Revendications

1. Procédé pour mesurer la hauteur du niveau d'un bain de fusion, dans lequel une sonde de mesure est mue, avec une composante de mouvement perpendiculaire à la surface du bain de fusion, alternativement en direction de la surface du bain de fusion et dans la direction opposée, ainsi que dans lequel une impédance entre le bain de fusion et la sonde de mesure est détectée électriquement et un positionnement respectif de la sonde de mesure est déterminé, **caractérisé en ce que** le long d'au moins une partie de la sonde de mesure (7) est conduit un gaz coussin en direction du bain de fusion (2).

2. Procédé selon la revendication 1, **caractérisé en ce que** le gaz coussin est dégagé à partir d'un espace interne de la sonde de mesure (7).

3. Procédé selon revendication 1 ou 2, **caractérisé en ce que** le gaz coussin s'écoule, au moins par sections, le long d'une partie intérieure (11) de la sonde de mesure (7).

4. Procédé selon l'une des revendications 1 à 3, **caractérisé en ce que** le gaz coussin s'écoule par une ouverture de sortie (13) en forme d'anneau qui entoure la partie intérieure (12).

5. Procédé selon la revendication 4, **caractérisé en ce que** le gaz coussin s'écoule par une ouverture de sortie sensiblement circulaire.

6. Procédé selon l'une des revendications 1 à 5, **caractérisé en ce que**, comme gaz coussin, on utilise un gaz protecteur (5).

7. Procédé selon l'une des revendications 1 à 6, **caractérisé en ce que** le gaz coussin coule avec une ionisation définie et connue en direction de la surface du bain de fusion(4).

8. Procédé selon l'une des revendications 1 à 7, **caractérisé en ce que** le gaz coussin coule à une température sensiblement constante et connue en direction du bain de fusion (2).

9. Procédé selon l'une des revendications 1 à 8, **caractérisé en ce que** la sonde de mesure (7) est déplacée en va-et-vient sensiblement perpendiculairement par rapport à la surface du bain de fusion (4).

10. Procédé selon l'une des revendications 1 à 9, **caractérisé en ce que** la sonde de mesure (7) est utilisée en tant que partie d'un système de réglage d'une hauteur de niveau d'un bain de fusion (2) à l'intérieur d'un convertisseur.

11. Procédé selon l'une des revendications 1 à 10, **caractérisé en ce que** la hauteur du niveau du bain de fusion (2) est mesurée dans la région d'une coquille pour la coulée continue.

12. Procédé selon l'une des revendications 1 à 11, **caractérisé en ce qu'**est effectuée une détection de la position de la sonde de mesure (7) par rapport à la position d'un fond (3) du convertisseur (1).

13. Procédé selon l'une des revendications 1 à 12, **caractérisé en ce qu'**un point d'inversion du mouvement de la sonde (7) en direction du bain de fusion (2) est capté par une mesure de la position de la sonde de mesure (7) et est exploité pour la détermination de la hauteur du niveau du bain de fusion (2) en fonction de la technique de mesure.

14. Procédé selon l'une des revendications 1 à 13, **caractérisé en ce que** le mouvement d'inversion de la sonde de mesure (7) est prédéterminé en fonction des résultats d'une mesure de l'impédance.

15. Procédé selon l'une des revendications 1 à 14, **caractérisé en ce que** le mouvement d'inversion de la sonde de mesure (7) est effectué en fonction d'une mesure de différence.

16. Dispositif pour mesurer une hauteur de niveau d'un bain de fusion qui présente un système de commande qui positionne alternativement la sonde de mesure perpendiculairement à la surface du bain de fusion avec une composante de déplacement, ainsi qu'un système de mesure pour le captage d'une impédance électrique entre la sonde de mesure et le bain de fusion, et qui est pourvu d'un système pour la détermination de chaque positionnement de la sonde de mesure, **caractérisé en ce que** la sonde de mesure (7) présente, dans la région de son extension orientable vers le bain de fusion (2), au moins une ouverture d'entrée (13) pour un gaz coussin.

17. Dispositif selon la revendication 16, **caractérisé en ce que** la sonde de mesure (7) présente une partie intérieure (11) entourée d'une gaine (10).

18. Dispositif selon revendication 16 ou 17, **caractérisé en ce que**, entre la partie intérieure (11) et la gaine (10), une fente (12) s'étend au moins par sections.

19. Dispositif selon l'une des revendications 16 à 18, **caractérisé en ce que** la gaine (10) entoure coaxialement, au moins par sections, la partie intérieure (11).

20. Dispositif selon l'une des revendications 16 à 19, **caractérisé en ce que** l'ouverture de sortie (13) entoure en forme de cercle la partie intérieure (11)

21. Dispositif selon l'une des revendications 16 à 20, **caractérisé en ce que** la partie intérieure (11) présente un bec de mesure (15) qui fait saillie en dehors de la gaine (10).

22. Dispositif selon l'une des revendications 16 à 21, **caractérisé en ce que** la sonde de mesure (7) est pourvue d'une conduite d'amenée de gaz (14).

23. Dispositif selon la revendication 22, **caractérisé en ce que** la conduite d'amenée de gaz (14) est réalisée sous la forme d'une pièce en T qui est raccordée à la gaine (10).

24. Dispositif selon l'une des revendications 16 à 23, **caractérisé en ce que** la partie intérieure (11) est maintenue dans la gaine (10) de manière à pouvoir être remplacée.

25. Dispositif selon l'une des revendications 16 à 24, **caractérisé en ce que** l'ouverture de sortie (13) présente une direction d'écoulement orientée sensiblement dans la direction d'un axe longitudinal de la sonde de mesure (7).

26. Dispositif selon l'une des revendications 16 à 25, **caractérisé en ce que** l'ouverture de sortie (13) présente une direction d'écoulement sensiblement oblique par rapport à l'axe longitudinal de la sonde de mesure (7).
